# EUROPÄISCHE PATENTSCHRIFT

(11) **EP 0 728 918 B1**
(45) Veröffentlichungstag und Bekanntmachung des Hinweises auf die Patenterteilung: **10.03.1999**
(21) Anmeldenummer: 96100670.7
(22) Anmeldetag: 18.01.1996
(51) Int. Cl.: F02B 27/02

(54) **Ansaugvorrichtung für eine Kolbenbrennkraftmaschine**
Intake device for a piston-type combustion engine
Dispositif d'admissions pour moteur à combustion de type à pistons

(30) Priorität: 23.02.1995 DE 19506306
(43) Veröffentlichungstag der Anmeldung: 28.08.1996
(73) Patentinhaber: FILTERWERK MANN & HUMMEL GMBH, 71631 Ludwigsburg (DE)
(72) Erfinder: Altmann, Otto, D-83022 Rosenheim (DE); Brenner, Gerhard, D-71679 Asperg (DE)
(74) Vertreter: Voth, Gerhard, Dipl.-Ing.

(56) Entgegenhaltungen:
- EP-A- 0 237 755
- EP-A- 0 551 209
- EP-A- 0 636 774
- DE-A- 3 433 653
- DE-A- 3 825 000
- DE-A- 3 921 081
- DE-A- 3 940 486
- DE-A- 4 018 612
- DE-A- 4 028 489
- DE-U- 8 704 464
- US-A- 2 862 490
- PATENT ABSTRACTS OF JAPAN vol. 12, no. 14 (M-659) [2861] , 16.Januar 1988 & JP 62 174529 A (HINO), 31.Juli 1987,

## Beschreibung

Die Erfindung betrifft eine Ansaugvorrichtung nach dem Oberbegriff des Hauptanspruchs. Eine solche Ansaugvorrichtung ist beispielsweise aus der DE-OS 39 21 081 bekannt. Die bekannte Saugrohranlage für eine Mehrzylinderbrennkraftmaschine weist einen zylindrischen Ansaugverteilerraum und zu den einzelnen Zylindern führende Einzelsaugrohre auf, die um den Ansaugverteilerraum herum geführt und in Längsrichtung desselben nebeneinander angeordnet sind. Zur Erzielung von zwei unterschiedlichen Schwingrohrlängen steht jedes einzelne Saugrohr mit dem Ansaugverteilerraum über zwei in einem Winkelabstand voneinander in der Umfangswand des Ansaugverteilerraums vorgesehene Steueröffnungen in Verbindung.

In dem Ansaugverteilerraum ist ein rohrförmiger Drehschieber angeordnet, der für jedes Einzelsaugrohr mindestens einen Steuerschlitz aufweist. Dieser Steuerschlitz steht in einer Endstellung des Drehschiebers mit der ersten Steueröffnung in Verbindung, während die andere Steueröffnung von der Wand des Drehschiebers abgedeckt ist. Dadurch wird eine lange Schwingrohrlänge verwirklicht. Wird der Drehschieber in seine andere Endstellung gedreht, so wird die erste Steueröffnung von der Wand des Drehschiebers abgedeckt, der Steuerschlitz kommt mit der zweiten Steueröffnung in Verbindung, wodurch eine kurze Schwingrohrlänge eingestellt wird.

Ein Nachteil dieser bekannten Einrichtung ist darin zu sehen, daß keine stufenlose Einstellmöglichkeit für die Schwingrohrlänge gegeben ist. Dies bedeutet, daß ein Optimum an Leistungsausbeute nur in zwei eng begrenzten Drehzahlbereichen der Brennkraftmaschine möglich ist.

Es ist weiterhin aus der DE-PS 34 46 377 eine Ansaugvorrichtung für eine Kolbenbrennkraftmaschine bekannt. Auch dort ist ein Drehschieber angeordnet, der die Ansaugrohrlänge variabel verändert. Diese Vorrichtung ist jedoch konstruktiv sehr aufwendig und weist strömungstechnische Nachteile auf.

Der Erfindung liegt die Aufgabe zugrunde, eine Ansaugvorrichtung zu schaffen, die die oben genannten Nachteile vermeidet und insbesondere im Kunststoffspritzgießverfahren einfach herstellbar ist.

Diese Aufgabe wird ausgehend von dem Oberbegriff des Hauptanspruchs durch dessen kennzeichnenden Merkmale gelöst.

Der wesentliche Vorteil der Erfindung ist darin zu sehen, daß der Drehschieber über seinen gesamten Umfang an einer Zylinderwand geführt wird. Diese Zylinderwand weist Durchbrüche auf, die entsprechend dem Rohrdurchmesser der Einzelsaugrohre dimensioniert sind. Damit besteht die Möglichkeit, in jeder beliebigen Drehschieberstellung den vollen Rohrquerschnitt zur Verfügung zu stellen. Der Drehschieber wird durch die Zylinderwand in seiner radialen Lage fixiert. Zusätzliche Lagerelemente sind nicht mehr erforderlich.

Ferner beträgt die Durchtrittsöffnung des Drehschiebers die doppelte Breite der Öffnung der Zylinderwand, so daß selbst in Zwischenstellungen der volle Ansaugdurchmesser zur Verfügung steht.

In einer zweckmäßigen Weiterbildung ist der Drehschieber mit einer elektromotorischen Ansteuerung versehen. Selbstverständlich ist auch jede andere Ansteuerungsart möglich, beispielsweise über Unterdruckstellglieder.

Bei bestimmten Lastzuständen ist es zweckmäßig, die Einzelsaugrohre miteinander zu koppeln. Dies erfolgt bekanntermaßen durch Resonanzklappen. In einer Ausgestaltung der Erfindung sind diese Resonanzklappen in den Einzelsaugrohren angeordnet und verbinden die jeweils benachbart liegenden Einzelsaugrohre miteinander.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Die Erfindung wird nachfolgend anhand von Ausführungsbeispielen näher erläutert. Es zeigt
- Figur 1: eine Schnittdarstellung eines Drehschiebers in einer Ansaugvorrichtung,
- Figur 2: eine Abwicklung zur Darstellung des wirksamen Rohrdurchmessers,

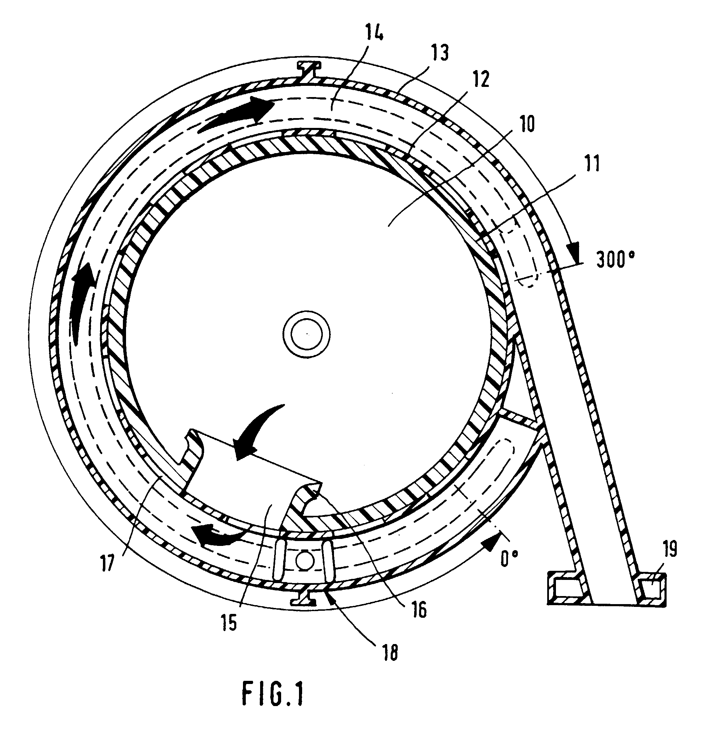

Die Schnittdarstellung gemäß Figur 1 zeigt eine Ansaugvorrichtung bzw. eine Sauganlage, bestehend aus einem mittig angeordnetem Luftsammler oder Luftsammelraum 10, einem Drehschieber 11, der konzentrisch in dem Luftsammelraum angeordnet ist und an einer Zylinderwand 12 anliegt. Zwischen Zylinderwand 12 und Außenkontur 13 befinden sich die Einzelsaugrohre 14, die hintereinander liegen und von denen in der Darstellung eines sichtbar ist.

Der Drehschieber 11 ist mit einer Durchtrittsöffnung 15 versehen. Diese ist mit einer Einlaßtulpe 16 ausgestattet. Die Zylinderwand 12 weist über den Umfang verteilt Durchbrüche 17 auf. Diese Durchbrüche sind so gestaltet, daß die Öffnung dem Querschnitt des Einzelsaugrohrs entspricht. In jedem Einzelsaugrohr ist ein Absperrschieber 18 angeordnet, der den Totraum des Einzelsaugrohrs begrenzt. In der hier gezeigten Stellung weist das Einzelsaugrohr nahezu seine volle Länge auf. Bewegt sich der Drehschieber rechtsdrehend, dann wird die Länge des Einzelsaugrohres verkürzt. Der maximal mögliche Drehwinkel des Drehschiebers 11 beträgt ca. 300°. Durch die stufenlose Veränderung der Sauglänge läßt sich der Wirkungsgrad eines Motors insbesondere im oberen Drehzahlbereich wesentlich steigern, d. h. jeder gewünschten Drehzahl kann die entsprechende optimale Schwingrohrlänge zugeordnet werden. Diese Zuordnung verhindert lokale Unstetigkeiten wie Drehmomentspitzen oder Drehmomenteinbrüche. Über den Flansch 19 wird die Sauganlage an der Verbrennungskraftmaschine befestigt.

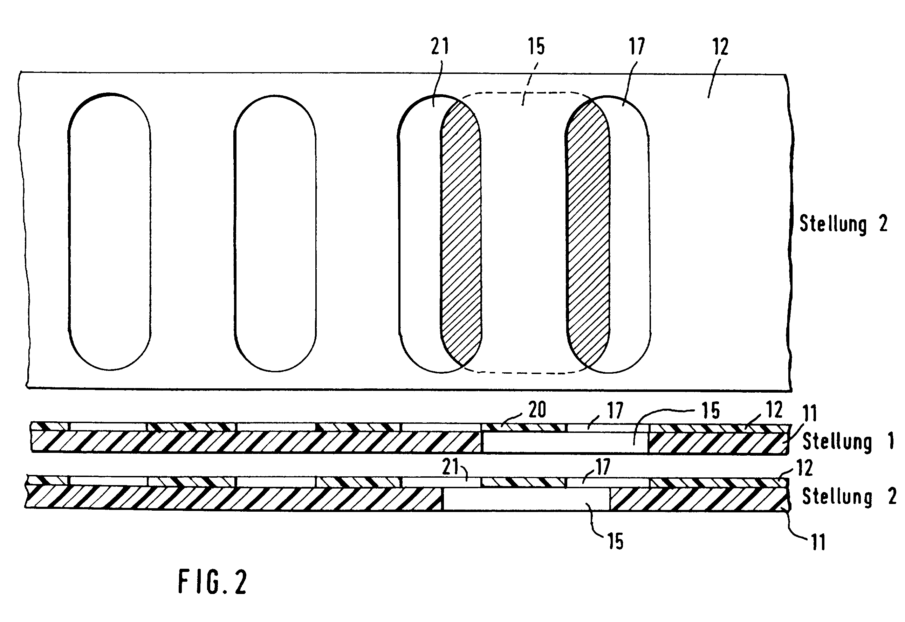

In Figur 2 ist eine Abwicklung des Drehschiebers 11 und der Zylinderwand 12 gezeigt. In Stellung 1 befindet sich die Durchtrittsöffnung 15 des Drehschiebers über einem Durchbruch 17 und einer Wandfläche 20. In Stellung 2 befindet sich der Drehschieber mit seiner Durchtrittsöffnung 15 teilweise über dem Durchbruch 17 und teilweise über dem Durchbruch 21. In beiden Stellungen steht der volle Rohrquerschnitt des jeweiligen Einzelsaugrohrs zur Verfügung. Dies ist selbstverständlich auch in Zwischenstellungen gewährleistet.

Es besteht auch die Möglichkeit, die Durchbrüche 17, 21 breitenvariabel zu gestalten, d. h. längs der Abwicklung der Zylinderwand 12 den Querschnitt stufenweise zu verringern oder zu vergrößern. Damit läßt sich der Ansaugquerschnitt an die Motordrehzahl anpassen.

### Bezugszeichenliste

- 10: Luftsammler
- 11: Drehschieber
- 12: Zylinderwand
- 13: Außenkontur
- 14: Einzelsaugror
- 15: Durchtrittsöffnung
- 16: Einlaßtulpe
- 17: Durchbruch
- 18: Absperrschieber
- 19: Flansch
- 20: Wandfläche
- 21: Durchbruch

## Patentansprüche

1. Ansaugvorrichtung für eine Kolbenbrennkraftmaschine mit mehreren Zylindern mit einem Ansaugverteilerraum und mit zu den einzelnen Zylindern führenden Einzelsaugrohren, (14), die in Längsrichtung desselben nebeneinander angeordnet sind, wobei der Ansaugverteilerraum einen kreisförmigen Querschnitt hat und ein Drehschieber (11) vorgesehen ist, der sich im wesentlichen über die gesamte Länge des Ansaugverteilerraums erstreckt und zwischen zwei Endstellungen drehbar im Ansaugverteilerraum angeordnet ist, wobei dieser Drehschieber (11) zu jedem Einzelsaugrohr (14) eine Durchtrittsöffnung (15) zwischen Einzelsaugrohr (14) und Ansaugverteilerraum aufweist, wobei der Drehschieber (11) innerhalb einer Zylinderwand (12) geführt ist, dadurch gekennzeichnet, daß die Zylinderwand (12) Durchbrüche (17) aufweist, welche dem Rohrdurchmesser der Einzelsaugrohre (14) entsprechen und die Durchtrittsöffnung (15) des Drehschiebers (11) dem Doppelten eines Durchbruchs (17) der Zylinderwand (12) entspricht.

2. Ansaugvorrichtung nach Anspruch 1, dadurch gekennzeichnet, daß der Drehschieber (11) elektromotorisch ansteuerbar ist.

3. Ansaugvorrichtung nach einem der vorherigen Ansprüche, dadurch gekennzeichnet, daß die Einzelsaugrohre (14) mit Resonanzklappen untereinander verbunden sind.

## Claims

1. Induction device for a piston-type internal combustion engine having a plurality of cylinders, said device including an induction manifold chamber and individual suction tubes (14), which lead to the individual cylinders and are disposed adjacent one another in the longitudinal direction of said chamber, the induction manifold chamber having a circular cross-section, and a rotary slide (11) being provided, which extends substantially over the entire length of the induction manifold chamber and is rotatably disposed in the induction manifold chamber between two end positions, this rotary slide (11) having, for each individual suction tube (14), a through-aperture (15) between the individual suction tube (14) and the induction manifold chamber, the rotary slide (11) being guided within a cylinder wall (12), characterised in that the cylinder wall (12) has openings (17) which correspond to the diameter of the individual suction tubes (14), and the through-aperture (15) in the rotary slide (11) corresponds to twice the size of an opening (17) in the cylinder wall (12).

2. Induction device according to claim 1, characterised in that the rotary slide (11) is actuatable by an electric motor.

3. Induction device according to one of the preceding claims, characterised in that the individual suction tubes (14) are interconnected by means of resonance flaps.

## Revendications

1. Dispositif d'aspiration pour un moteur à combustion interne à pistons comprenant plusieurs cylindres et un collecteur d'aspiration ainsi qu'une tubulure d'aspiration, séparée (14) associée à chacun des cylindres, ces tubulures étant juxtaposées dans la direction longitudinale,
le collecteur d'aspiration ayant une section circulaire et comportant un boisseau rotatif (11) qui s'étend essentiellement sur toute la longueur du collecteur d'aspiration et peut tourner entre deux positions de fin de course dans le collecteur d'aspiration,
ce boisseau rotatif (11) comportant pour chacune des tubulures d'aspiration (14), un orifice de passage (15) entre chaque tubulure d'aspiration (14) et le collecteur d'aspiration,
le tiroir (11) étant guidé à l'intérieur d'une paroi cylindrique (12)
caractérisé en ce que
la paroi cylindrique (12) comporte des passages (17) correspondant au diamètre des différentes tubulures d'aspiration (14) et le passage (15) du tiroir rotatif (11) correspond au double d'un passage (17) de la paroi cylindrique (12).

2. Dispositif d'aspiration selon la revendication 1,
caractérisé en ce que
le tiroir rotatif (11) est commandé par un moteur électrique.

3. Dispositif d'aspiration selon l'une quelconque précédentes,
caractérisé en ce que
les différentes tubulures d'aspiration (14) sont reliées entre elles par des volets de résonance.
